# EUROPÄISCHE PATENTSCHRIFT

(11) **EP 3 080 798 B1**
(45) Veröffentlichungstag und Bekanntmachung des Hinweises auf die Patenterteilung: **12.11.2025**
(21) Anmeldenummer: 14814811.7
(22) Anmeldetag: 11.12.2014
(51) Int. Cl.: G09F 19/18, G09F 19/22, G09F 21/04

(54) **VERFAHREN ZUR DARSTELLUNG EINER EINSTEIGEINFORMATION, UMSTEIGEINFORMATION ODER FLUCHTINFORMATION FÜR EIN SCHIENENFAHRZEUG**
METHOD FOR DISPLAYING BOARDING INFORMATION, CONNECTION INFORMATION OR FLIGHT INFORMATION FOR A RAIL VEHICLE
PROCÉDÉ POUR PRÉSENTER UNE INFORMATION D'EMBARQUEMENT, DE CORRESPONDANCE OU D'ISSUE DE SECOURS POUR UN VÉHICULE FERROVIAIRE

(30) Priorität: 11.12.2013 DE 102013225675
(43) Veröffentlichungstag der Anmeldung: 19.10.2016
(73) Patentinhaber: ALSTOM Holdings, 93400 Saint-Ouen-sur-Seine (FR)
(72) Erfinder: TEMPEL, Jürgen, 68159 Mannheim (DE); NEWESELY, Gerald, A-1090 Wien (AT)
(74) Vertreter: Patentanwälte Bressel und Partner mbB
(86) Internationale Anmeldenummer: PCT/EP2014/077391
(87) Internationale Veröffentlichungsnummer: WO 2015/086751

(56) Entgegenhaltungen:
- DE-A1- 2 645 352
- JP-A- 2001 278 048
- JP-A- 2010 286 800
- US-A1- 2012 194 356

## Beschreibung

Die vorliegende Erfindung betrifft ein Verfahren zur Leitung umsteigender oder flüchtender Fahrgäste aus einem Schienenfahrzeug,.

Umsteigeinformationen an Haltestellen für Straßenbahnen werden häufig auf Schildern oder in elektronischen Anzeigen, deren Inhalt variabel ist, bereitgestellt. Auf Schildern sind in der Regel die Liniennummer und das Fahrtziel der Line vermerkt. In elektronischen Anzeigen wird häufig noch die Zeit bis zur Abfahrt angezeigt.

Solche Umsteigehinweise sind insbesondere an unübersichtlichen Orten, zum Beispiel in Fußgängerzonen und auf Kreuzungen und bei Haltestellen mit vielfältigen Umsteigemöglichkeiten, zur Information von umsteigenden Fahrgästen nicht ausreichend. An solchen Orten treffen oftmals mehrere Straßenbahnen, aus verschiedenen Richtungen kommend oder in verschiedene Richtungen abfahrend, aufeinander, was die Situation für Fahrgäste besonders unübersichtlich macht. Verschärft wird diese Situation in Fußgängerzonen mit zusätzlichen Fußgängerströmen. Insbesondere ältere Fahrgäste oder Kinder sind mit der Situation an solchen unübersichtlichen Orten oft überfordert.

Die US 2012 0194356 A1 betrifft ein System zum Schutz der Sicherheit von Insassen, die ein parkendes Fahrzeug verlassen oder betreten. Das System verfügt über Sensoren und eine oder mehrere Bilderzeugungsvorrichtungen, die ein Bild auf den Bürgersteig projizieren. Das System antizipiert, dass der Insasse das Fahrzeug verlassen wird, und die Zeit, die es dauern wird, das Fahrzeug zu verlassen. Das System steuert die Bilderzeugungsvorrichtungen, um Fahrer des herannahenden Verkehrs vor dem Aussteigen des Insassen zu warnen. Es werden dazu Bilder auf eine Straßenoberfläche neben das parkende Fahrzeug projiziert. Damit wird aber das oben genannte Problem nicht gelöst.

Die DE 26 45 352 A1 offenbart eine Anordnung zur Regelung des zu- und ablaufenden Fahrgaststromes auf Bahnhöfen, wobei in den Fahrzeugen und entlang der Bahnsteige im Haltebereich der Züge optische Anzeigeeinrichtungen angeordnet sind, die entsprechend dem jeweiligen Verkehrsaufkommen steuerbar sind und die Aus- bzw. Eingänge bezeichnen.

Die JP 2001 278048 A offenbart mehrere Projektoren, die auf einem Bahnsteig entlang der Fahrtrichtung eines Zuges installiert sind. Die Projektoren projizieren und zeigen die Ein- /Ausstiegspositionen an, die den Ein-/Ausstiegseingängen des Zuges entsprechen.

Eine Aufgabe der vorliegenden Erfindung ist die bessere Information über Umsteigemöglichkeiten bei öffentlichen Verkehrsmitteln, insbesondere bei Schienenfahrzeugen.

Gelöst wird die Aufgabe mit einem Verfahren nach Anspruch 1.

Nach einer grundlegenden Idee der Erfindung erfolgt eine Information durch Projektion visuell wahrnehmbarer Signale auf der Oberfläche einer Straße oder eines Gehwegs, welche einen Fahrgast über Umsteigemöglichkeiten informieren.

Die Projektion ist vorzugsweise eine Lichtprojektion, insbesondere eine Laserlichtprojektion, die in ihrer Art, Intensität und/oder Dauer von dem Betriebszustand des Schienenfahrzeugs abhängig gesteuert werden kann. Die optische Signalisierung dient der Information von Fahrgästen.

Weiterhin kann eine Kombination mit akustischen Signalen, insbesondere im Gleichtakt oder wechselnd, erfolgen. Akustische Signale sind insbesondere Durchsagen über die Umsteigemöglichkeiten. Der Schwerpunkt der Information kann zwischen dem rein optischen Signal und dem zusätzlichen akustischen Signal wählbar sein. Durch Vermeidung oder weitgehende Vermeidung akustischer Signale kann eine unnötige Lärmbelästigung vermieden werden.

Die Signalstärke des optischen Signals kann in Abhängigkeit der Uhrzeit, des Beleuchtungszustands (z.B. durch künstliche Beleuchtung der Fahrbahn), des Tageslichts und/oder der Fahrstrecke individuell gewählt bzw. eingestellt werden. Zur Steigerung der Aufmerksamkeit kann die Intensität der Projektion variiert werden, beispielsweise an- und abschwellend.

Die Umsteigeinformation und die Fluchtinformation sind eine Wegeinformation für den Fahrgast. Die Wegeinformation gibt an, wie oder auf welchem Weg man zu dem Fahrzeug gelangt oder, insbesondere im Fall einer Fluchtinformation, von dem Fahrzeug weg gelangt. Umsteigeinformation und/oder Fluchtinformationen können zusammenfassend als Wegeinformationen bezeichnet werden. Eine Wegeinformation kann beispielsweise in Form zumindest einer Wegmarkierung projiziert werden, insbesondere in Form einer nachfolgend noch beschriebenen Richtungsanzeige.

Unter dem Begriff "Gehweg" sind alle Flächen zu verstehen, die ausschließlich oder vorrangig von Fußgängern benutzt werden. Dazu zählen auch Bahnsteige, Warteflächen oder Fußwege im Bereich von Haltestellen.

Der Begriff "Straße" umfasst unter anderem Straßen mit integrierten Schienenwegen.

Die Umsteigeinformation betrifft ein Schienenfahrzeug, d.h. es wird eine Umsteigeinformation zu diesem Schienenfahrzeug angegeben, das zur Unterscheidung von anderen Schienenfahrzeugen auch als "erstes Schienenfahrzeug" bezeichnet wird. Insbesondere kann die Umsteigeinformation, wie erwähnt, eine Information sein, wie oder auf welchem Weg man zu dem Fahrzeug gelangt, eine Information über die Liniennummer des ersten Schienenfahrzeugs, über das Fahrtziel des ersten Schienenfahrzeugs und/oder eine Zeitinformation über die Abfahrtzeit oder Restzeit bis zur Abfahrt des ersten Schienenfahrzeugs. Die Fluchtinformation ist insbesondere eine Information, wie oder auf welchem Weg man von dem Fahrzeug weg gelangt.

Die Darstellung der Fluchtinformation kann beispielsweise bei einem Nothalt des Fahrzeugs zur Anwendung kommen, beispielsweise bei Brand oder Unfall. Die Weginformation zeigt dann einen Fluchtweg an. Alle hierin erwähnten Einrichtungen, wie Projektionseinrichtung, können zur Darstellung einer Fluchtinformation dienen.

In einer Ausführungsform der Erfindung enthält die Umsteigeinformation eine Information über die Belegung des Schienenfahrzeugs mit Fahrgästen. Die Belegung wird nachfolgend auch als "Besetzung" bezeichnet. Ein Vorteil dieser Ausführungsform besteht darin, dass umsteigenden Fahrgästen angezeigt werden kann, welche Ein- und Ausstiege zu bevorzugen oder zu vermeiden sind. Die Belegung bezieht sich vorzugsweise auf ein Modul oder einen Wagen eines Schienenfahrzeugs, oder einen Teil davon, der/das den Ein- /Ausstieg aufweist. Die Information über die Belegung kann somit auf einen Teilbereich eines Schienenfahrzeugs bezogen sein. Die Information über die Belegung kann zusätzlich oder stattdessen auf einen ausgewählten Aufenthaltsbereich für Fahrgäste bezogen sein. Von Interesse für spezielle Fahrgäste ist beispielsweise die Belegung von Sondernutzungsflächen/Multifunktionsflächen, wie beispielsweise für Rollstuhlfahrer, Kinderwägen oder Radfahrer. D.h. es können bezogen auf einen gesamten Schienenfahrzeugverbund, beispielsweise eine komplette Straßenbahn, verschiedene Belegungszustände angezeigt werden, wenn die Belegung von Wagen zu Wagen oder von Modul zu Modul unterschiedlich ist. Die Belegung kann mit einer oder mehreren Erfassungseinrichtungen erfasst werden, beispielsweise Kameras oder Sensoren, die in Sitzen vorgesehen sein können. Eine Information über die Belegung kann von der Erfassungseinrichtung an eine Steuerungseinrichtung übermittelt werden, die in Abhängigkeit von der Belegung die Projektion über die Belegung des Schienenfahrzeugs steuert.

In einer speziellen Variante wird die Information über die Belegung des Schienenfahrzeugs in Abhängigkeit von der Belegung des Schienenfahrzeugs verändert. Dazu können von Erfassungseinrichtungen wiederholt Informationen über die Belegung erfasst werden oder anders ausgedrückt diese Informationen aktualisiert werden. Die aktualisierten Informationen können an die Steuerungseinrichtung übermittelt werden, die wiederum in Abhängigkeit von der aktuellen Belegung die Projektion über die Belegung des Schienenfahrzeugs steuert. In dieser Variante kann während einer Haltedauer eine Änderung der Belegung den Passanten und Passagieren angezeigt werden.

Die Belegung bzw. Besetzung kann z.B. in Form einer Information angezeigt werden, ob ein Einstieg empfohlen oder erlaubt oder ob ein Einstieg nicht empfohlen oder sogar untersagt wird, z.B. bei Überbelegung. In einer Variante kann eine Information in Form eines Belegungs- oder Besetzungsgrads angezeigt werden, wobei beispielsweise eine relative Auslastung des Fahrzeugs, insbesondere eines Wagens oder Moduls, angezeigt wird.

Eine Information über die Belegung kann als Symbol, Bild, Piktogramm, Text und/oder Farbinformation oder einer beliebigen Kombination davon dargestellt werden. Wenn die Belegung des Schienenfahrzeugs in Abhängigkeit von der Belegung des Schienenfahrzeugs verändert werden soll, kann das Symbol, Bild, Piktogramm, Text und/oder die Farbinformation oder eine Kombination davon verändert werden.

Hinsichtlich der Darstellung der Belegung oder speziell der Empfehlung von Ein- und Ausstiegen sind Ampelfarben - rot, gelb, grün - sowie weitere Warnfarben, wie z.B. orange, vorteilhaft, um den Füllzustand der Bahn im Passagierbereich hinter den Türen und der angrenzenden Bereiche anzuzeigen.

Das Verfahren umfasst vorzugsweise die Ermittlung der aktuellen oder voraussichtlichen zukünftigen Halteposition des ersten Schienenfahrzeugs und die Ermittlung der Umsteigeinformation aus der aktuellen oder zukünftigen Halteposition des ersten Schienenfahrzeugs. Der Aufenthaltsort kann durch Feststellung des aktuellen und/oder zukünftigen Bewegungszustandes, wie insbesondere Geschwindigkeit, Beschleunigung und/oder Fahrtrichtung des Fahrzeuges ermittelt werden.

Die Projektionseinrichtung kann von einer Steuerungseinrichtung gesteuert werden, in der Daten über den derzeitigen und/oder zukünftigen Bewegungszustand, wie Geschwindigkeit, Beschleunigung, Fahrtrichtung vorliegen. Die Steuereinrichtung kann von dem Fahrzeug aus direkt oder indirekt die Projektionseinrichtung steuern, z.B. eine an oder in einem Fahrzeug angebrachte Projektionseinrichtung.

Einer vorzugsweise elektronischen Steuerungseinrichtung können Daten über den derzeitigen und/oder zukünftigen Bewegungszustand, wie Geschwindigkeit, Beschleunigung, Fahrtrichtung übermittelt werden. Ferner können Informationen über die Liniennummer, das Fahrtziel, Ankunftszeit, Abfahrtszeit oder sonstige Fahrplandaten übermittelt werden. Aus den genannten Daten kann die zukünftige Ortsposition des Schienenfahrzeugs ermittelt werden, optional in Verbindung mit einer Zeitinformation wie Ankunftszeit, Restzeit bis zur Ankunft, Abfahrtszeit, Restzeit bis zur Abfahrt, woraus wiederum die Umsteigeinformation ermittelt werden kann. Die Ankunftszeit, Abfahrtszeit oder Restzeiten bis zur Ankunft oder Abfahrt können aus dem derzeitigen und/oder zukünftigen Bewegungszustand ermittelt werden. Die Verarbeitung bzw. Ermittlung von Daten über den derzeitigen und/oder zukünftigen Bewegungszustand und die zukünftige Ortsposition des Schienenfahrzeugs sowie der Umsteigeinformation kann auch an anderem Ort erfolgen, z.B. in einem Fahrtcomputer, und die Ergebnisse können zur weiteren Steuerung der Projektion der Information an die Steuerungseinrichtung übermittelt werden.

Die Erzeugung der Projektion kann beispielsweise durch eine lichttechnische, insbesondere laserbasierte Projektion erreicht werden. Die Projektion kann mittels eines lenkbaren Laserstrahls auf die Oberfläche der Straße oder des Gehwegs "gezeichnet" werden. Die Projektion kann in einer auffälligen Farbe sein, um die Aufmerksamkeit von Fahrgästen zu wecken.

Die Projektionseinrichtung kann in einem Scheinwerfer des Schienenfahrzeugs integriert sein.

Die Projektionseinrichtung kann zumindest eine Lichtquelle und Projektionsmittel zur gezielten Lenkung des Lichts aufweisen.

Die Projektionseinrichtung ist vorzugsweise eine Laserprojektionseinrichtung, die eine Laserlichtquelle und Projektionsmittel zur Lenkung eines Laserstrahls aufweist. Eine Laserprojektionseinrichtung ist in vorteilhafter Weise zum zeilenweisen oder pixelweisen Abstrahlen von Laserlichtstrahlen eingerichtet. Sie kann einen diodengepumpten Festkörperlaser zum Generieren von Laserlicht mit den Farben Rot, Grün und Blau aufweisen. Alternativ oder zusätzlich kann sie über einen Projektionskopf mit einem zweiachsigen Spiegelscanner zum vertikalen und horizontalen Ablenken eines Laserstrahls verfügen. Als Laserprojektionseinrichtung kann vorteilhaft eine Laservorrichtung auf Grundlage der Laser-Display-Technologie (LDT) verwendet werden. Bei der LDT wird das Bild zeilenweise auf eine Projektionsfläche geschrieben. Das Ablenken erfolgt durch einen speziellen Scanner mit einem Facettenspiegel (Zeilenaufbau) und einem Kippspiegel (Zeilenvorschub). Der Laserstrahl kann zuvor moduliert werden, wodurch die Helligkeit und Farbe eines jeden Bildpunkts definiert werden. Vorteile der LDT sind, dass nahezu beliebig geformte Projektionsflächen verwendet werden können, kein Fokussieren erforderlich ist, ein sehr hoher Kontrast erzielbar ist und eine große Farbpalette durch das Mischen reiner Grundfarben (RGB), also monochromatischen Lichts, gegeben ist. Statt der LDT kann auch jede andere geeignete Laservorrichtung verwendet werden, wie zum Beispiel eine Laservorrichtung auf Grundlage des Grating Light Valve Systems (der Fa. Silicon Light Machines) oder des Digital Micromirror Device Systems (der Fa. Texas Instruments).

Die Umsteigeinformation oder Fluchtinformation kann verschiedener Gestalt und Form sein, wie nachfolgend an speziellen Ausführungsformen erläutert. Die Ausführungsformen können beliebig miteinander kombiniert werden.

In einer Ausführungsform weist die Umsteigeinformation und/oder Fluchtinformation eine Richtungsanzeige zur Leitung umsteigender oder flüchtender Fahrgäste auf. Die Wegeinformation kann somit eine Richtungsanzeige zur Leitung umsteigender oder flüchtender Fahrgäste aufweisen. Eine Richtungsanzeige kann beispielsweis in Form eines oder mehrerer Pfeile oder Linien ausgestaltet sein, die auf die Straße und/oder den Gehweg projiziert werden und Fahrgästen die Richtung, aufzeigen, in die sie zum Umstieg in ein Fahrzeug gehen müssen, oder Fahrgästen die Richtung, aufzeigen, in die sie flüchten sollen. Die Richtungsanzeige führt bei einer Umsteigeinformation zu dem betreffenden Fahrzeug, insbesondere zu einer oder mehreren Türen des Fahrzeugs. Bei der oben genannten Variante einer Linie wird auch eine unterbrochene Linie, beispielsweise eine gestrichelte oder gepunktete Linie, als Linie angesehen. Eine Linie kann als Richtungsanzeige dienen, da beispielsweise beim Umsteigen ein Fahrgast von einem Fahrzeug kommend in ein anderes Fahrzeug umsteigt und damit die Bewegungsrichtung entlang der Linie klar ist. Ebenfalls ist die Bewegungsrichtung klar, wenn ein Fahrgast aus einem Fahrzeug flüchtet.

In einer Ausführungsform weist die Umsteigeinformation eine Liniennummer des Schienenfahrzeugs und/oder ein Fahrtziel auf.

In noch einer Ausführungsform weist die Umsteigeinformation eine Information über die Ankunftszeit oder Abfahrtszeit des betreffenden Schienenfahrzeugs auf.

In einer Ausführungsform umfasst die Umsteigeinformation eine Information über den voraussichtlichen zukünftigen Aufenthaltsort des Schienenfahrzeugs.

Möglich ist auch eine sogenannte Negativ-Anzeige, die eine Information darüber gibt, dass ein Umstieg nicht möglich ist, beispielsweise, dass das betreffende Fahrzeug ausfällt.

Es erfolgt in dem Verfahren vorzugsweise die Projektion von zeitlich begrenzten Umsteigeinformationen. In einer Ausführungsform erfolgt die Projektion eines Signals, welches eine Information angibt, ab wann oder bis wann die Umsteigeinformation gültig ist. Beispielsweise kann eine Information über einen Zeitraum angegeben werden, wie lange die Umsteigeinformation noch gültig ist oder ab wann die Umsteigeinformation gültig ist. Insbesondere kann eine Information über das Eintreffen, den Halt oder die Abfahrt des Schienenfahrzeugs projiziert werden, beispielsweise in Form einer Zeitdauer bis zum Eintreffen und/oder einer Zeitdauer bis zur Abfahrt.

Ein Zeitdauer-Signal kann verschiedener Gestalt sein. In einer Variante wird ein Zeitraum numerisch mit einer üblichen Maßeinheit, vorzugsweise Sekunden oder Minuten, angezeigt. In oder neben einer projizierten Umsteigeinformation, beispielsweise in Form eines Richtungsanzeigers, kann zusätzlich eine solche Zeitangabe projiziert werden. In einer anderen Variante kann ein Zeitraum in Form eines kleiner werdenden Objektes dargestellt werden, z.B. in Form eines in seiner Länge segmentweise abnehmenden Streifens oder Balkens oder in Form eines segmentweise verschwindenden Kreises. In noch einer Variante wird die Intensität der Projektion der Umsteigeinformation variiert, beispielsweise durch Variation der Intensität einer Lichtprojektion (blinkende Information), wobei die Frequenz der Variation schrittweise erhöht werden kann, je näher der Zeitpunkt kommt, zu dem die Umsteigeinformation nicht mehr gültig ist. In noch einer Variante wird die Farbe der Projektion der Umsteigeinformation variiert, beispielsweise von grün zu rot, wobei rot die Aufhebung oder kurz bevorstehende Aufhebung der Gültigkeit kennzeichnet.

In einer Ausführungsform der Erfindung wird ein Verfahren angegeben, umfassend
- die Übermittlung einer Information über eine aktuelle und/oder zukünftige Halteposition des ersten Schienenfahrzeugs an das zweite Schienenfahrzeug, oder die Speicherung einer solchen Information in dem zweiten Schienenfahrzeug,
- die Projektion der zumindest einen Umsteigeinformation von dem zweiten Schienenfahrzeug aus mit der Projektionseinrichtung.

Bei dieser Ausführungsform werden Projektionseinrichtungen anderer Fahrzeuge genutzt und eine Information zum Einstieg oder Umstieg kann vor Eintreffen des Fahrzeugs sichtbar gemacht werden. Das Verfahren kann als weiteren Schritt die Ermittlung der aktuellen oder zukünftigen Halteposition des ersten Schienenfahrzeugs umfassen, wenn diese nicht bereits bekannt ist. Ferner kann das Verfahren die Ermittlung der zumindest einen Umsteigeinformation aus einer aktuellen oder zukünftigen Halteposition des ersten Schienenfahrzeugs, und ggf. aus einer unten erläuterten Zeitinformation, umfassen.

Rein örtlich ist die Halteposition meist bekannt, beispielsweise durch Zuordnung einer Haltestelle. Eine erwähnte Speicherung kann z.B. in einem Fahrtcomputer erfolgen.

Die aktuelle oder zukünftige örtliche Halteposition kann zusätzlich eine Zeitinformation beinhalten, oder durch eine Zeitinformation ergänzt werden, wann die Haltposition erreicht oder wieder verlassen wird. Zeitinformationen sind beispielsweise Ankunftszeit, Abfahrtszeit und verbleibende Zeiten bis zur Ankunft oder Abfahrt. Die Zeitinformation kann über den aktuellen und/oder zukünftigen Bewegungszustand ermittelt werden. Der Bewegungszustand kann an das zweite Fahrzeug vom ersten Fahrzeug aus direkt oder indirekt, z.B. über eine Leitstelle, übermittelt werden. Die Übermittlung der Information über den aktuellen oder zukünftigen Aufenthaltsort des ersten Schienenfahrzeugs kann über eine Leitstelle oder direkt erfolgen, vorzugsweise über Funk. Übermittlungseinrichtungen, wie Sender und Empfänger, an dem ersten Schienenfahrzeug, dem zweiten oder weiteren Schienenfahrzeug können dazu vorgesehen sein.

Nachfolgend wird zur ersten Alternative auf ein zweites Schienenfahrzeug Bezug genommen, wobei das Verfahren auch die Möglichkeit mehrerer weiterer (zweites, drittes usw.) Schienenfahrzeuge umfasst. Das erste und das zweite Schienenfahrzeug können beispielsweise auf den gleichen oder auf benachbarten Gleisen fahren, insbesondere in entgegengesetzter Fahrtrichtung. Die Information wird dann vom zweiten Fahrzeug aus projiziert. In dieser Ausführungsform können mehrere Schienenfahrzeuge miteinander vernetzt werden, zum Beispiel direkt oder über eine Leitstelle und vorzugsweise per Funk. Das oben beschriebene Verfahren kann auch in umgekehrter Weise stattfinden, also indem die Übermittlung einer Information über die voraussichtliche zukünftige Halteposition, evt. Gekoppelt mit einer Zeitinformation, des zweiten Schienenfahrzeugs an das erste Schienenfahrzeug erfolgt und eine Umsteigeinformation betreffend das zweite Schienenfahrzeug von dem ersten Fahrzeug aus projiziert wird.

In der anderen Alternative kann bei der speziellen Ausführungsform des Verfahrens zumindest ein fester Standort zur Projektion einbezogen werden. An dem festen Standort ist eine Projektionseinrichtung angeordnet.

In einer Variante des Verfahrens erfolgt eine Änderung der Intensität der Projektion der Umsteigeinformation oder Fluchtinformation. Eine Intensitätsänderung in Form von Blinken kann verwendet werden, um die bevorstehende Ungültigkeit der Information zu signalisieren. Es ist stattdessen oder zusätzlich möglich, durch eine Intensitätsänderung die Aufmerksamkeit von Fahrgästen zu erhöhen, was insbesondere bei einer Anzeige eines Fluchtwegs von Bedeutung sein kann. Eine langsame Intensitätsänderung, oder eine langsames Blinken oder An- und-Abschwellen, kann beispielsweise auf die Information aufmerksam machen, eine schnelle Änderung in Form eines schnellen Blinkens kann die bevorstehende Ungültigkeit der Information, oder einer Gefahrensituation, signalisieren.

In noch einer Variante der Erfindung erfolgt die Projektion eines sichtbaren Signals über den Halt oder die Abfahrt des Schienenfahrzeugs auf der Oberfläche des Fahrweges. Auch hier ist die Projektion vorzugsweise eine Lichtprojektion, insbesondere eine Laserlichtprojektion. Im Fall eines Abfahrtsignals kann das Signal mehrstufig sein. Ein Spezialfall ist ein in der Intensität ansteigendes Signal. Das Signal, das den Halt des Schienenfahrzeugs anzeigt, ist in einer speziellen Variante die Projektion einer Halteposition des Schienenfahrzeuges, beispielsweise an einer Haltestelle.

In einer Variante der Erfindung erfolgt zusätzlich zur Umsteigeinformation oder Fluchtinformation eine Projektion von zusätzlichen Fahrgastinformationen, insbesondere im Haltestellenbereich.

Die Erfindung offenbart auch ein Schienenfahrzeug, insbesondere eine Straßenbahn, aufweisend eine Einrichtung zur Projektion einer Umsteigeinformation und/oder Fluchtinformation auf die Oberfläche eines Gehweges oder einer Straße, umfassend
- eine Projektionseinrichtung, eingerichtet zur Projektion einer Umsteigeinformation und/oder Fluchtinformation, auf die Oberfläche des Gehweges oder der Straße,
- eine Steuerungseinrichtung, eingerichtet zur Steuerung der Projektion einer Umsteigeinformation und/oder Fluchtinformation, betreffend dieses Schienenfahrzeug oder betreffend ein zweites Schienenfahrzeug auf der Oberfläche des Gehweges oder der Straße.

Hierzu wird auf die gesamte Offenbarung des obigen Verfahrens verwiesen. Dort genannte gegenständliche Merkmale können auf Merkmale des Schienenfahrzeugs sein. Die Projektionseinrichtung wurde bereits oben beschrieben.

In einer Variante des offenbarten Schienenfahrzeugs ist die Einrichtung eine Einrichtung zur Projektion einer Umsteigeinformation. Alternativ zur Projektion einer Umsteigeinformation kann eine Fluchtinformation projiziert werden. Das Gleiche gilt für die Projektionseinrichtung.

Die Steuerungseinrichtung kann in Abhängigkeit einer derzeitigen und/oder zukünftigen Halteposition des Schienenfahrzeugs oder eines anderen Schienenfahrzeugs die Projektion einer Umsteigeinformation betreffend dieses Schienenfahrzeug oder betreffend das andere Schienenfahrzeug auf der Oberfläche des Gehweges oder der Straße steuern. Die derzeitige und/oder zukünftige Halteposition kann eine Zeitinformation umfassen, wie Ankunftszeit, Abfahrtzeit, oder Restzeit bis zur Ankunft und/oder Abfahrt. Die Steuerungseinrichtung steuert den Projektionsort. Einer vorzugsweise elektronischen Steuerungseinrichtung können Daten über den derzeitigen und/oder zukünftigen Bewegungszustand, wie Geschwindigkeit, Beschleunigung, Fahrtrichtung, übermittelt werden. Aus diesen Daten kann die zukünftige Ortsposition des Schienenfahrzeugs ermittelt werden, woraus wiederum die Umsteigeinformation ermittelt werden kann. Die Verarbeitung bzw. Ermittlung von Daten über den derzeitigen und/oder zukünftigen Bewegungszustand und die zukünftige Ortsposition des Schienenfahrzeugs sowie der Umsteigeinformation kann auch an anderem Ort erfolgen, z.B. in einem Fahrtcomputer, und die Ergebnisse können zur weiteren Steuerung der Projektion der Umsteigeinformation an die Steuerungseinrichtung übermittelt werden.

Der Steuerungseinrichtung können in einer weiteren Variante Informationen über die Besetzung des Schienenfahrzeugs oder eines Teils davon (z.B. Wagen oder Modul) übermittelt werden. Die Steuerungseinrichtung kann dann die Projektion einer Umsteigeinformation steuern, welche eine Information über die Belegung des Schienenfahrzeugs mit Fahrgästen enthält. Informationen über die Besetzung können der Steuerungseinrichtung beispielsweise direkt von einer Erfassungseinrichtung übermittelt werden oder über einen Fahrtcomputer, der wiederum mit einer Erfassungseinrichtung verbunden ist. Es kann eine Verarbeitung von Daten die Besetzung des Schienenfahrzeugs in einem Fahrtcomputer erfolgen und die Ergebnisse können zur weiteren Steuerung der Projektion der Umsteigeinformation an die Steuerungseinrichtung übermittelt werden.

Nachfolgend wird die Erfindung anhand von Beispielen beschrieben. Es zeigen:
- Fig. 1: eine Straßenbahn mit Projektionseinrichtungen,
- Fig. 2: eine Straßenbahn mit einer Einsteigeinformation (nicht erfindungsgemäß)
- Fig. 3: mehrere Straßenbahnen mit Umsteigeinformationen, und
- Fig. 4 - 6: eine Straßenbahn mit projizierten Belegungs-Informationen zur Beschleunigung des Ein- und Ausstiegsvorganges an der Fahrzeugtür

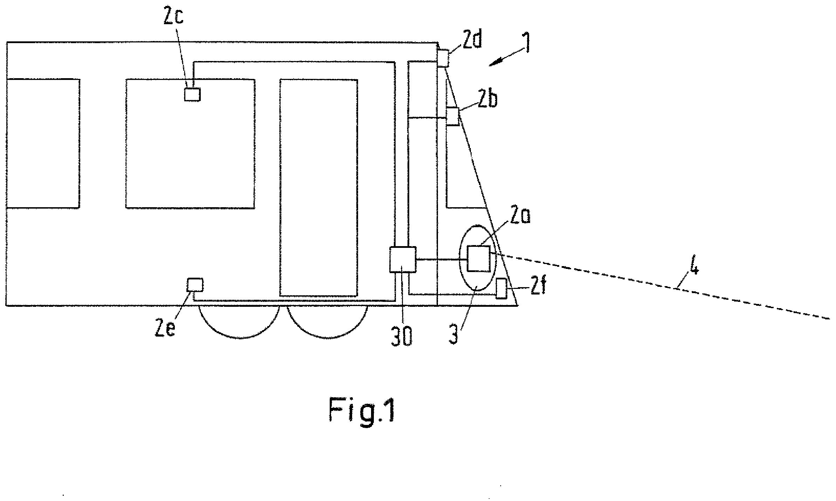

Fig. 1 zeigt ein Schienenfahrzeug 1, in diesem Fall eine Straßenbahn, in einer Teilansicht. Dargestellt sind verschiedene mögliche Positionen einer Projektionseinrichtung 2. Die Projektionseinrichtung 2a ist in einem Scheinwerfer 3 integriert. Die Projektionseinrichtungen 2b und 2c sind hinter einer Front bzw. hinter einer Seitenscheibe angebracht. Die Projektionseinrichtungen 2d, 2e und 2f sind auf der Außenseite der Straßenbahn entweder im oberen oder unteren Bereich des Wagenkastens angebracht. Mit den Projektionseinrichtungen 2a, 2b, 2d oder 2f können besonders vorteilhaft eine Umsteigeinformation vor oder hinter dem Fahrzeug dargestellt werden, mit den Projektionseinrichtungen 2c und 2e vorteilhaft eine Umsteigeinformation seitlich des Schienenfahrzeugs 1. Es ist nicht erforderlich, dass alle die gezeigten Projektionseinrichtungen an dem Fahrzeug 1 vorhanden sind. Beispielsweise kann alternativ die Einrichtung 2a oder 2f vorhanden sein, alternativ die Einrichtung 2b oder 2d oder alternativ die Einrichtung 2c oder 2e. Auf der dem Betrachter abgewandten Rückseite des Fahrzeugs 1 können analog Projektionseinrichtungen wie 2c und/oder 2e angebracht sein.

Weiterhin können entlang der Straßenbahn 1, von der nur der vordere Teil gezeigt ist, weitere Projektionseinrichtungen vorhanden sein.

Beispielhaft nur an der Projektionseinrichtung 2a ist ein Laserstrahl 4 eingezeichnet, der von der Projektionseinrichtung 2a ausgesendet wird und zum zeilenweisen Aufbau einer Umsteigeinformation auf die Oberfläche der Straße dient.

In Fig. 1 ist ferner eine Steuerungseinrichtung 30 gezeigt, die mit den Projektionseinrichtungen 2a bis 2f verbunden ist und die Richtung der von den Projektionseinrichtungen ausgesandten Laserstrahlen, wie z.B. dem Strahl 4, zwecks Projektion von Umsteigeinformationen steuert.

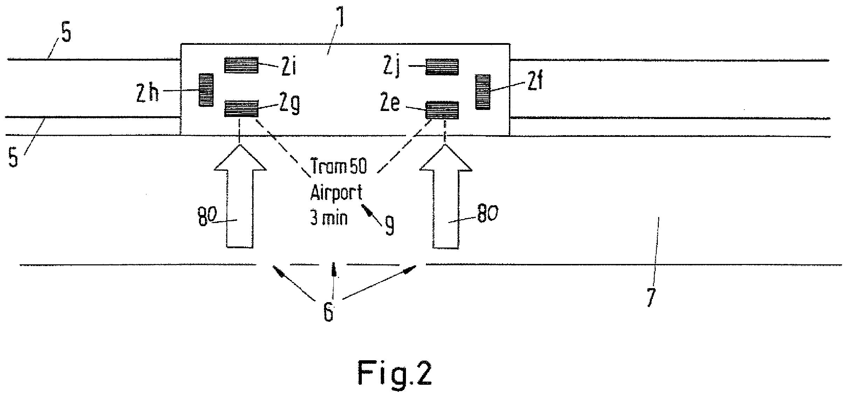

Fig. 2 zeigt eine Straßenbahn 1 in schematischer Darstellung von oben, also mit Blickrichtung des Betrachters auf das Dach der Straßenbahn und auf die Oberfläche der Straße und des Gehwegs. Gezeigt sind ferner Schienen 5. Beispielsweise befindet sich die Straßenbahn 1 im Haltezustand an einer Haltestelle.

Von Projektionseinrichtungen 2e und 2g aus wird eine Einsteigeinformation 6 (nicht erfindungsgemäß) auf die Oberfläche des Gehwegs, hier eines Bahnsteigs 7, projiziert. Die Einsteigeinformation 6 besteht in diesem Fall aus zwei Pfeilen 80, die in Richtung der Eingänge des Schienenfahrzeugs 1 zeigen, sowie einer Information 9 über die Liniennummer (Tram 50), das Fahrziel (Airport) und die Abfahrtszeit (3 min). Die Projektion der Einsteigeinformation 6 durch die Projektionseinrichtungen 2e und 2g ist durch gestrichelte Linien angedeutet. An dem Schienenfahrzeug 1 sind weitere Projektionseinrichtungen 2f, 2h, 2i, 2j vorgesehen, die derzeit nicht verwendet werden.

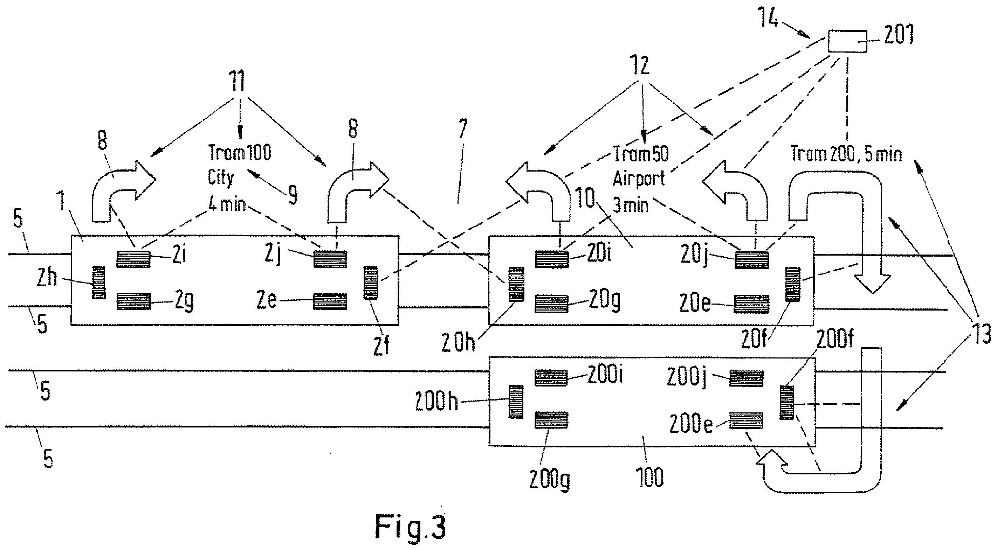

In der Fig. 3 sind drei Schienenfahrzeuge 1, 10, 100 gezeigt, die sich im Haltezustand an einer Haltestelle befinden. Von den Projektionseinrichtungen 2i und 2j des Schienenfahrzeugs 1 wird eine Umsteigeinformation 11 zu einem zweiten Schienenfahrzeug 10 projiziert (nicht erfindungsgemäß). Die Umsteigeinformation besteht aus zwei Richtungspfeilen 8, die aussteigende Fahrgäste aus dem ersten Schienenfahrzeug 1 zu dem zweiten Schienenfahrzeug 10 leiten, sowie aus einer Linieninformation, einem Fahrziel und einer Abfahrtszeit 9 des zweiten Schienenfahrzeugs 10. Die Projektion ist in allen Fällen in der Fig. 3 durch gestrichelte Linien angedeutet. In umgekehrter Weise wird von dem zweiten Schienenfahrzeug 10 aus eine Umsteigeinformation 12 projiziert, wobei die Projektion durch Projektionseinrichtungen 20i und 20j auf den benachbarten Gehweg 7 erfolgt. Auch hier besteht die Umsteigeinformation aus zwei Richtungspfeilen zur Leitung der aussteigenden bzw. umsteigenden Fahrgäste, aus einer Liniennummer, einem Fahrziel und einer Abfahrtszeit. In dem Beispiel der Fig. 3 wird die Umsteigeinformation 11, die das zweite Fahrzeug 10 betrifft, von dem ersten Fahrzeug 1 aus projiziert (nicht erfindungsgemäß). In gleicher Weise wird die Umsteigeinformation 12, die das erste Fahrzeug 1 betrifft, von dem zweiten Fahrzeug 10 aus projiziert (nicht erfindungsgemäß). Ebenfalls bzw. zusätzlich ist es möglich, dass die Umsteigeinformation 12, die das erste Fahrzeug 1 betrifft, auch vom ersten Fahrzeug selbst aus projiziert wird (erfindungsgemäß), was durch die gestrichelte Linie von der Projektionseinrichtung 2f am ersten Fahrzeug 1 zu dem linken Pfeil der Umsteigeinformation 12 dargestellt ist. In umgekehrter Weise kann (erfindungsgemäß) von der Projektionseinrichtung 20h aus, die sich am zweiten Fahrzeug 10 befindet, eine Umsteigeinformation 11 betreffend das zweite Fahrzeug 10 projiziert werden, dargestellt durch eine gestrichelte Linie von der Projektionseinrichtung 20h zu dem rechten projizierten Pfeil 8 der Umsteigeinformation 11.

Die Pfeile 8 können alternativ als einen Fluchtweg anzeigen statt einer Umsteigeinformation 11 zu einem zweiten Fahrzeug. Die Information 11 ist in diesem Fall keine Umsteigeinformation sondern eine Not- oder Fluchtweginformation 11. Diese Not- oder Fluchtweginformation 11 kann bei einem Nothalt des Fahrzeugs, beispielsweise bei einem Unfall oder einem Brand, angezeigt werden. In gleicher Weise können die Pfeile der Information 12 neben dem zweiten Fahrzeug 10 eine Not- oder Fluchtinformation 12 sein.

Weiterhin ist in Fig. 3 dargestellt, dass von dem zweiten Fahrzeug 10 aus eine Umsteigeinformation 13 zu dem dritten Fahrzeug 100 projiziert wird, in Form eines Pfeils, der aussteigende Fahrgäste quer über den Schienenweg leitet und der von den Projektionseinrichtungen 20f und 20j projiziert wird. Die Umsteigeinformation 13 wird aber auch von den Projektionseinrichtungen 200e und 200f projiziert, die an dem dritten Schienenfahrzeug 100 angebracht sind. Die Projektion durch die Einrichtungen 200e und 200f ist ein ergänzender Richtungspfeil.

In der Fig. 3 ist dargestellt, dass von einem festen Standort 14 aus (nicht erfindungsgemäß) mit einer Projektionseinrichtung 201 die Umsteigeinformation 12 projiziert wird und die Umsteigeinformation 13 teilweise projiziert wird. Die Projektionseinrichtung 201 kann beispielsweise an einem Mast oder an einem Haltestellendach angebracht sein. Es können mehrere solche Projektionseinrichtungen fest installiert sein, die zur Projektion der weiteren Umsteigeinformationen 11 und 13 dienen können.

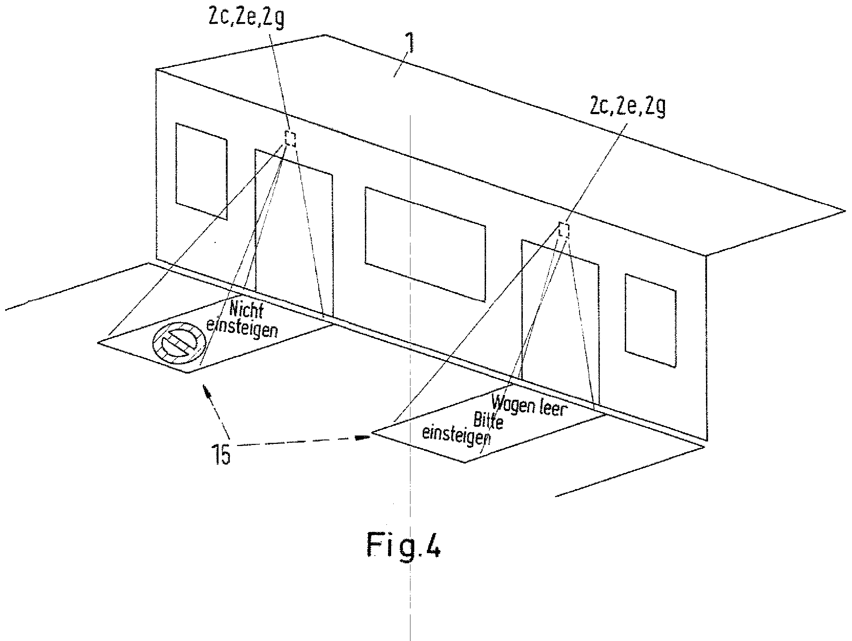

Schließlich sind in Fig. 4, 5 und 6 weitere Variationen der Ein- und Umsteigeinformation dargestellt, die zusätzlich die Belegung der Bahn 1, vor die Türen projiziert (nicht erfindungsgemäß), darstellen. Diese Belegungsinformation 15, 17, 18 kann insbesondere zusätzlich zu einer vorangehend gezeigten Richtungsanzeige 8 angegeben werden. Diese Belegungsinformation 15, 17, 18 ermöglicht Passanten, die auf den Einstieg warten, eine bessere Planung des Einsteigevorganges durch Wahl von anderen Türen, sofern der aktuelle Belegungsgrad hoch ist. In einer Variante ist vorzugsweise die Belegung der Sondernutzungsfläche/Multifunktionsfläche für Rollstuhlfahrer oder Kinderwägen darzustellen. Erfassungseinrichtungen, wie Kameras, zur Ermittlung der Belegung des Fahrzeugs 1 mit Fahrgästen sind nicht dargestellt.

Beispielsweise ist in Fig. 4 eine Information von Typ 15 als Kombination von Form, Text, Piktogramm und Farbe dargestellt. Bei der linken Tür mit der Textinformation "nicht einsteigen" ist ein Piktogramm mit einem Nicht-Einsteigen-Symbol dargestellt. Weiterhin werden der Text und das Piktogramm mit roter Farbe hinterlegt. Bei der rechten Tür ist die Textinformation "Wagen leer, bitte einsteigen" projiziert und der Text ist außerdem flächig in grün hinterlegt.

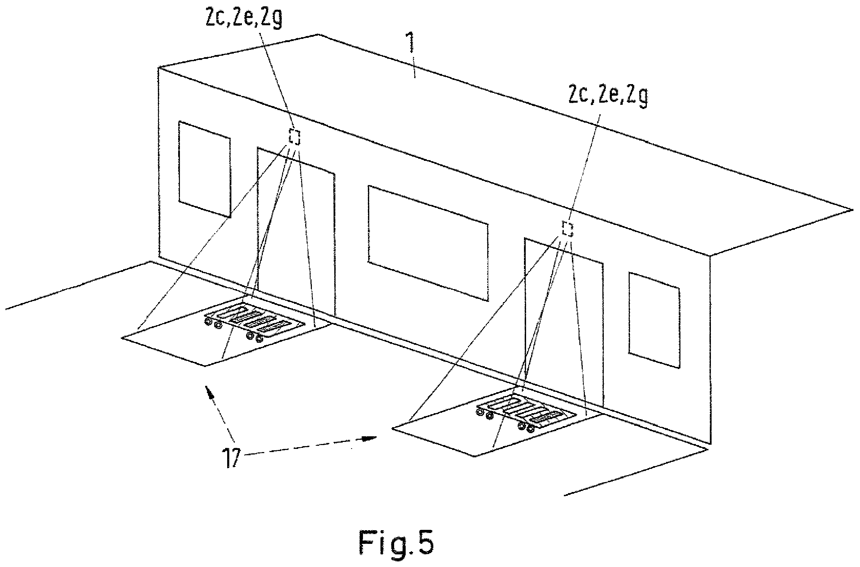

In Fig. 5 sind Piktogramme 17 zur Darstellung des Belegungsgrads bzw. Besetzungsgrads dargestellt. Das Piktogramm vor der linken Tür zeigt eine fast vollständige Besetzung an, in Form eines Balkenpiktogramms mit drei ausgefüllten Balken von vier Balken insgesamt, beispielweise in gelber Farbe. Das Piktogramm vor der rechten Tür zeigt einen fast unbesetzten Wagenteil an, in Form eines Balkenpiktogramms mit nur einem ausgefüllten Balken, beispielweise in grüner Farbe dargestellt. Vorstellbar ist diese Anzeige auch mit Relevanz auf Belegungszustand der Sondernutzungsfläche/Multifunktionsfläche.

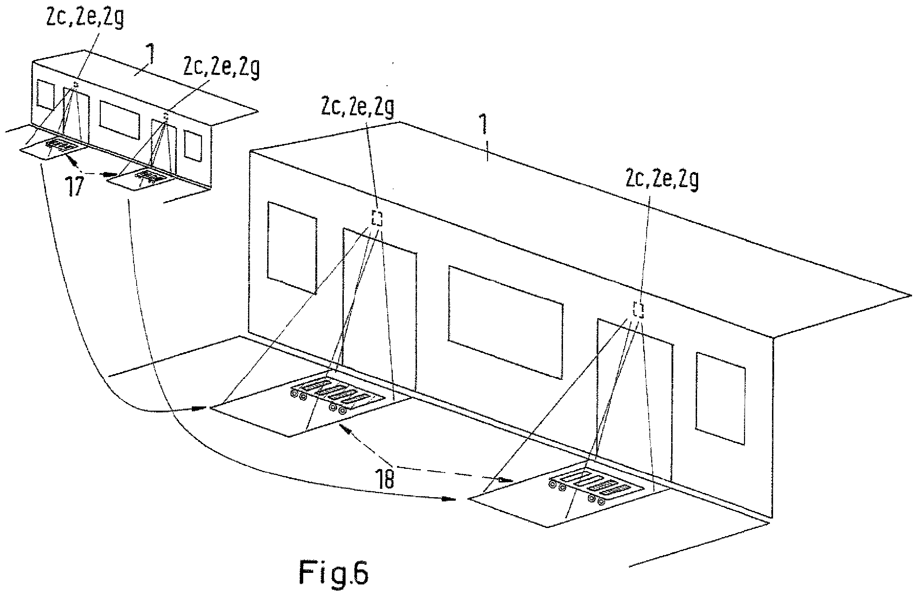

In Fig. 6 ist eine vorteilhafte Veränderung der Informationen von Typ 17 dargestellt, welche durch Animation der Informationen während des Haltevorganges die Änderung des "Besetztheit"-Grades bzw. Belegungsgrades widerspiegeln. Es wird als vorteilhaft angesehen, wenn durch Änderung des Piktogramms 17 und/oder der Form und/oder der Farbe die Änderung vom Zustand geringerer Besetztheit - beispielsweise charakterisiert durch Farben grün und gelb in Fig. 5 mit Balken-Piktogrammen - in den Zustand höherer Besetztheit - beispielsweise charakterisiert durch die Farben gelb und rot in Balkenpiktogrammen 18 der Fig. 6 dargestellt wird. Die Änderung der Piktogramme ist logisch nachvollziehbar und spiegelt die geänderte Belegung wider. In diesem Beispiel ändert sich die Farbe des linken Piktogramms 18 von gelb (Fig. 5) zu rot und es sind darin vier rote Balken dargestellt. Die Farbe des rechten Piktogramms 18 ändert sich von grün (Fig. 5) zu gelb und es sind darin zwei gelbe Balken dargestellt. Insgesamt ist der Besetzungsgrad des Wagens 1 angestiegen. Es können somit Form und/oder Farbe, hier beides, der Piktogramme geändert werden.

## Patentansprüche

1. Verfahren zur Leitung umsteigender oder flüchtender Fahrgäste aus einem ersten Schienenfahrzeug (1), umfassend
- die Darstellung einer Umsteigeinformation oder Fluchtinformation durch Projektion zumindest einer Umsteigeinformation (11) und/oder Fluchtinformation (11), auf die Oberfläche eines Gehweges (7) oder einer Straße, wobei die zumindest eine Umsteigeinformation (11) und/oder Fluchtinformation (11), mit einer Projektionseinrichtung (20h) oder mit einer Mehrzahl Projektionseinrichtungen (20e, 20f, 20g, 20h, 20i, 20j ) projiziert wird,
und weiterhin umfassend
- die Leitung der umsteigenden Fahrgäste durch die Umsteigeinformation (11), die eine Wegeinformation (8) zur Leitung der umsteigenden Fahrgäste ist, wobei die Wegeinformation (8) auf die Oberfläche des Gehweges (7) oder der Straße projiziert wird, und darüber informiert, auf welchem Weg die Fahrgäste von dem ersten Schienenfahrzeug (1) zu einem zweiten Schienenfahrzeug (10) gelangen, oder
- die Leitung der flüchtenden Fahrgäste durch die Fluchtinformation (11), die eine Wegeinformation (8) zur Leitung der flüchtenden Fahrgäste ist, wobei die Wegeinformation auf die Oberfläche des Gehweges (7) oder der Straße projiziert wird, und darüber informiert, auf welchem Weg die Fahrgäste von dem ersten Schienenfahrzeug (1) weg gelangen,
wobei die Projektionseinrichtung (20h), oder eine oder mehrere der Projektionseinrichtungen (20e, 20f, 20g, 20h, 20i, 20j), an oder in dem zweiten Schienenfahrzeug (10) angebracht ist/sind, und die zumindest eine Umsteigeinformation (11), oder die Fluchtinformation (11), von dem zweiten Schienenfahrzeug (10) aus projiziert wird.

2. Verfahren nach Anspruch 1, umfassend die Ermittlung der aktuellen oder voraussichtlichen zukünftigen Halteposition des ersten Schienenfahrzeugs (1) und die Ermittlung der zumindest einen Umsteigeinformation aus dem aktuellen oder zukünftigen Aufenthaltsort des ersten Schienenfahrzeugs.

3. Verfahren nach einem der vorangehenden Ansprüche, wobei eine weitere Projektionseinrichtung (2a-2j), oder eine oder mehrere weitere Projektionseinrichtungen, an oder in dem ersten Schienenfahrzeug (1) angebracht ist/sind und die zumindest eine Umsteigeinformation, oder die Fluchtinformation, von dem ersten Schienenfahrzeug (1) aus projiziert wird.

4. Verfahren nach Anspruch 1, umfassend
- die Übermittlung einer Information über eine aktuelle und/oder zukünftige Halteposition des ersten Schienenfahrzeugs (1) an das zweite Schienenfahrzeug (10) oder die Speicherung einer solchen Information in dem zweiten Schienenfahrzeug (10),
- die Projektion der zumindest einen Umsteigeinformation von dem zweiten Schienenfahrzeug (10) aus mit der Projektionseinrichtung.

5. Verfahren nach Anspruch 4, wobei zusätzlich zur Übermittlung oder Speicherung der Information über die aktuelle oder zukünftige Halteposition die Übermittlung oder Speicherung einer Zeitinformation erfolgt, wann die Haltposition von dem ersten Schienenfahrzeug (1) erreicht und/oder wieder verlassen wird.

6. Verfahren nach Anspruch 5, wobei an das zweite Schienenfahrzeug (10) eine Information über den aktuellen und/oder zukünftigen Bewegungszustand des ersten Schienenfahrzeugs (1) übermittelt wird und daraus die Zeitinformation ermittelt wird.

7. Verfahren nach einem der vorangehenden Ansprüche, wobei die Umsteigeinformation eine Richtungsanzeige (8) zur Leitung umsteigender Fahrgäste aufweist.

8. Verfahren nach Anspruch 7, wobei die Richtungsanzeige (8; 80) in Form eines oder mehrerer Pfeile oder in Form einer oder mehrerer Linien ausgestaltet ist.

9. Verfahren nach einem der vorangehenden Ansprüche, wobei die Umsteigeinformation (11) eine Liniennummer des ersten Schienenfahrzeugs (9) und/oder ein Fahrtziel (9) aufweist.

10. Verfahren nach einem der vorangehenden Ansprüche, wobei die Umsteigeinformation eine Information über die Ankunftszeit oder Abfahrtszeit (9) des ersten Schienenfahrzeugs aufweist.

11. Verfahren nach einem der vorangehenden Ansprüche, umfassend die Projektion eines Signals, welches eine Information angibt, ab wann oder bis wann die Umsteigeinformation oder die Fluchtinformation, gültig ist.

12. Verfahren nach einem der vorangehenden Ansprüche, wobei die Umsteigeinformation eine Information über die Belegung (15, 17, 18) des ersten Schienenfahrzeugs mit Fahrgästen enthält.

13. Verfahren nach Anspruch 12, wobei die Information über die Belegung des ersten Schienenfahrzeugs in Abhängigkeit von einer veränderten Belegung des Schienenfahrzeugs verändert wird.

## Claims

1. Method for guiding passengers changing trains or fleeing from a first rail vehicle (1), comprising
- displaying transfer information or escape information by projecting at least one piece of transfer information (11) and/or escape information (11) onto the surface of a walkway (7) or a road, wherein the at least one transfer information (11) and/or escape information (11) being projected by a projection device (20h) or by a plurality of projection devices (20e, 20f, 20g, 20h, 20i, 20j),
and further comprising
- guiding passengers changing trains by means of transfer information (11), which is route information (8) for guiding passengers changing trains, wherein the route information (8) is projected onto the surface of the walkway (7) or the road and provides information on the route passengers should take from the first rail vehicle (1) to a second rail vehicle (10), or
- guiding escaping passengers by means of escape information (11), which is route information (8) for guiding escaping passengers, wherein the route information is projected onto the surface of the walkway (7) or the road, and informs passengers how to get off the first rail vehicle (1),
wherein the projection device (20h), or one or more of the projection devices (20e, 20f, 20g, 20h, 20i, 20j), is/are attached to or in the second rail vehicle (10), and the at least one transfer information (11), or the escape information (11), is projected from the second rail vehicle (10).

2. Method according to claim 1, comprising determining the current or expected future stopping position of the first rail vehicle (1) and determining the at least one transfer information from the current or future location of the first rail vehicle.

3. Method according to one of the preceding claims, wherein a further projection device (2a-2j), or one or more further projection devices, is/are attached to or in the first rail vehicle (1) and the at least one transfer information, or the escape information, is projected from the first rail vehicle (1) is projected.

4. Method according to claim 1, comprising
- transmitting information about a current and/or future stopping position of the first rail vehicle (1) to the second rail vehicle (10) or storing such information in the second rail vehicle (10),
- projecting the at least one transfer information from the second rail vehicle (10) using the projection device.

5. Method according to claim 4, wherein, in addition to transmitting or storing the information about the current or future stopping position, time information is transmitted or stored indicating when the stopping position is reached and/or left again by the first rail vehicle (1).

6. Method according to claim 5, wherein information about the current and/or future movement status of the first rail vehicle (1) is transmitted to the second rail vehicle (10) and the time information is determined from this.

7. Method according to one of the preceding claims, wherein the transfer information includes a direction indicator (8) for guiding transferring passengers.

8. Method according to claim 7, wherein the direction indicator (8; 80) is designed in the form of one or more arrows or in the form of one or more lines.

9. Method according to one of the preceding claims, wherein the transfer information (11) comprises a line number of the first rail vehicle (9) and/or a destination (9).

10. Method according to one of the preceding claims, wherein the transfer information includes information about the arrival time or departure time (9) of the first rail vehicle.

11. Method according to one of the preceding claims, comprising the projection of a signal indicating information about when the transfer information or route information is valid from or until.

12. Method according to one of the preceding claims, wherein the transfer information contains information about the occupancy (15, 17, 18) of the first rail vehicle with passengers.

13. Method according to claim 12, wherein the information about the occupancy of the first rail vehicle is changed in response to a change in the occupancy of the rail vehicle.

## Revendications

1. Procédé pour guider les passagers changeant de train ou fuyant un premier véhicule ferroviaire (1), comprenant
- l'affichage d'informations de transfert ou d'informations d'évacuation par projection d'au moins une information de transfert (11) et/ou une information d'évacuation (11) sur la surface d'un trottoir (7) ou d'une route, dans laquelle la au moins une information de transfert (11) et/ou information d'évacuation (11) est projetée par un dispositif de projection (20h) ou par une pluralité de dispositifs de projection (20e, 20f, 20g, 20h, 20i, 20j ), et comprenant en outre
- guider les passagers qui changent de train au moyen d'informations de transfert (11), qui sont des informations d'itinéraire (8) destinées à guider les passagers qui changent de train, les informations d'itinéraire (8) étant projetées sur la surface du trottoir (7) ou de la route et fournissant des informations sur l'itinéraire que les passagers doivent emprunter pour passer du premier véhicule ferroviaire (1) à un deuxième véhicule ferroviaire (10), ou
- guider les passagers qui évacuent à l'aide d'informations d'évacuation (11), qui sont des informations d'itinéraire (8) destinées à guider les passagers qui évacuent, les informations d'itinéraire étant projetées sur la surface du trottoir (7) ou de la route et indiquant aux passagers comment descendre du premier véhicule ferroviaire (1),
le dispositif de projection (20h), ou un ou plusieurs des dispositifs de projection (20e, 20f, 20g, 20h, 20i, 20j), est/sont fixé(s) sur ou dans le deuxième véhicule ferroviaire (10), et la au moins une information de transfert (11), ou l'information d'évacuation (11), est projetée à partir du deuxième véhicule ferroviaire (10).

2. Procédé selon la revendication 1, comprenant la détermination de la position d'arrêt actuelle ou future prévue du premier véhicule ferroviaire (1) et la détermination d'au moins une information de transfert à partir de l'emplacement actuel ou futur du premier véhicule ferroviaire.

3. Procédé selon l'une des revendications précédentes, dans lequel un ou plusieurs autres dispositifs de projection (2a-2j) sont fixés au premier véhicule ferroviaire (1) ou dans celui-ci, et au moins une information de transfert, ou l'information d'évacuation, est projetée à partir du premier véhicule ferroviaire (1).

4. Procédé selon la revendication 1, comprenant la transmission d'informations sur une position d'arrêt actuelle et/ou future du premier véhicule ferroviaire (1) au deuxième véhicule ferroviaire (10) ou le stockage de ces informations dans le deuxième véhicule ferroviaire (10),
la projection de la au moins une information de transfert à partir du deuxième véhicule ferroviaire (10) à l'aide du dispositif de projection.

5. Procédé selon la revendication 4, dans lequel, en plus de transmettre ou de stocker les informations relatives à la position d'arrêt actuelle ou future, des informations temporelles sont transmises ou stockées, indiquant quand la position d'arrêt est atteinte et/ou quittée à nouveau par le premier véhicule ferroviaire (1).

6. Procédé selon la revendication 5, dans lequel des informations sur l'état de déplacement actuel et/ou futur du premier véhicule ferroviaire (1) sont transmises au deuxième véhicule ferroviaire (10) et les informations temporelles sont déterminées à partir de celles-ci.

7. Procédé selon l'une des revendications précédentes, dans lequel les informations de transfert comprennent un indicateur de direction (8) pour guider les passagers en transfert.

8. Procédé selon la revendication 7, dans lequel l'indicateur de direction (8 ; 80) est conçu sous la forme d'une ou plusieurs flèches ou sous la forme d'une ou plusieurs lignes.

9. Procédé selon l'une des revendications précédentes, dans lequel les informations de transfert (11) comprennent un numéro de ligne du premier véhicule ferroviaire (9) et/ou une destination (9).

10. Procédé selon l'une des revendications précédentes, dans lequel les informations de transfert comprennent des informations sur l'heure d'arrivée ou l'heure de départ (9) du premier véhicule ferroviaire.

11. Procédé selon l'une des revendications précédentes, comprenant la projection d'un signal indiquant des informations sur la période de validité des informations de transfert ou des informations d'itinéraire.

12. Procédé selon l'une des revendications précédentes, dans lequel les informations de transfert contiennent des informations sur l'occupation (15, 17, 18) du premier véhicule ferroviaire par des passagers.

13. Procédé selon la revendication 12, dans lequel les informations sur l'occupation du premier véhicule ferroviaire sont modifiées en réponse à un changement dans l'occupation du véhicule ferroviaire.
